# EUROPÄISCHE PATENTANMELDUNG

(11) **EP 2 733 863 A1**
(43) Veröffentlichungstag der Anmeldung: **21.05.2014**
(21) Anmeldenummer: 13450049.5
(22) Anmeldetag: 14.11.2013
(51) Int. Cl.: H04B 5/00, G07C 9/00, H04L 1/00

(54) **Verfahren zur Übermittlung von Daten zwischen einer ersten Sende- und/oder Empfangseinrichtung und einer zweiten Sende- und/oder Empfangseinrichtung**

(30) Priorität: 14.11.2012 AT 12102012
(71) Anmelder: Evva Sicherheitstechnologie GmbH, 1120 Wien (AT)
(72) Erfinder: Reinhard J., Enne, A-1120 Wien (AT); Lukas, Prenner, A-1180 Wien (AT)
(74) Vertreter: Keschmann, Marc

(57) **Zusammenfassung**

Bei einem Verfahren zur Übermittlung von Daten zwischen einer ersten Sende- und/oder Empfangseinrichtung und einer zweiten Sende- und/oder Empfangseinrichtung erfolgt die Datenübermittlung zumindest teilweise über eine kapazitive Kopplung zwischen der ersten Sende- und/oder Empfangseinrichtung und der zweiten Sende- und/oder Empfangseinrichtung und die zu übermittelnden Daten werden auf wenigstens ein Trägersignal aufmoduliert. Die kapazitive Datenübermittlung umfasst die Übermittlung eines ersten und eines zweiten Teilstroms von Daten, wobei der erste Teilstrom der kapazitiv übermittelten Daten mittels eines ersten Modulationsverfahrens, insbesondere On-Off Keying (OOK), binäre Frequenzumtastung (2-FSK) oder binäre Phasenumtastung (BPSK), und der zweite Teilstrom der kapazitiv übermittelten Daten mittels eines vom ersten Modulationsverfahren verschiedenen, zweiten, vorzugsweise digitalen Modulationsverfahrens moduliert wird.

## Beschreibung

Die Erfindung betrifft ein Verfahren zur Übermittlung von Daten zwischen einer ersten Sende- und/oder Empfangseinrichtung und einer zweiten Sende- und/oder Empfangseinrichtung, wobei die Datenübermittlung zumindest teilweise über eine kapazitive Kopplung zwischen der ersten und der zweiten Sende- und/oder Empfangseinrichtung erfolgt und die zu übermittelnden Daten auf wenigstens ein Trägersignal aufmoduliert werden.

Insbesondere betrifft die Erfindung ein Datenübermittlungsverfahren für die Zutrittskontrolle insbesondere in Gebäuden, bei der eine vorzugsweise bidirektionale Datenübermittlung zwischen einem elektronischen Schlüssel und einer Zutrittskontrollvorrichtung stattfindet, wobei die Datenübermittlung die Übermittlung von Identifikationsdaten vom elektronischen Schlüssel an die Zutrittskontrollvorrichtung umfasst, wobei die Identifikationsdaten in der Zutrittskontrollvorrichtung zur Feststellung der Zutrittsberechtigung ausgewertet werden und in Abhängigkeit von der festgestellten Zutrittsberechtigung der Zutritt freigegeben oder verwehrt wird, wobei die Datenübermittlung zumindest teilweise über eine kapazitive Kopplung zwischen dem elektronischen Schlüssel und der Zutrittskontrollvorrichtung erfolgt und die zu übermittelnden Daten auf wenigstens ein Trägersignal aufmoduliert werden.

Die Erfindung betrifft weiters eine Datenübertragungsvorrichtung umfassend wenigstens eine erste Sende- und/oder Empfangseinrichtung, um eine Datenübermittlung zwischen der ersten Sende- und/oder Empfangseinrichtung und einer zweiten Sende- und/oder Empfangseinrichtung zu ermöglichen, wobei die erste Sende-und/oder Empfangseinrichtung ein wenigstens eine Koppelelektrode aufweisendes kapazitives Datenübertragungsmodul aufweist, sodass die Datenübermittlung über eine kapazitive Kopplung zwischen der ersten Sende-und/oder Empfangseinrichtung und der zweiten Sende-und/oder Empfangseinrichtung erfolgen kann, wobei das Datenübertragungsmodul wenigstens eine Modulations- und/oder Demodulationsschaltung zum Aufmodulieren von Daten auf ein Trägersignal bzw. zum Demodulieren von Daten aus einem Signal aufweist.

Die Datenübertragungsvorrichtung ist insbesondere zur Durchführung des eingangs genannten Verfahrens geeignet.

Verfahren und Vorrichtungen dieser Art für die Anwendung in der Zutrittskontrolle sind beispielsweise aus den Schriften WO 2007/128009 A1, EP 1168678 A1 und WO 00/15931 A1 bekannt geworden. Die kapazitive Datenübertragung funktioniert so, dass die erste Sende- und/oder Empfangseinrichtung ein im Wesentlichen elektrisches Nahfeld erzeugt, über welches die zu übertragenden Daten ausgesendet werden. Durch dieses Feld wird die erste Sende- und/oder Empfangseinrichtung an die diese tragende Person gekoppelt und die Signale werden somit über die Person weitergeleitet. Weiters weist die Empfangseinheit der zweiten Sende- und/oder Empfangseinrichtung wenigstens eine kapazitive Koppelfläche auf, sodass sich bei Berührung der zweiten Sende- und/oder Empfangseinrichtung oder bei Annäherung an diese durch die Person ein Wechselstromkreis schließt und ein Datensignal zur zweiten Sende- und/oder Empfangseinrichtung übermittelt werden kann, welches von der Empfangseinheit erfasst wird. Die kapazitive Datenübertragung hat im Anwendungsfall der Zutrittskontrolle zur Folge, dass der elektronische Schlüssel selbst nicht in unmittelbare Nähe zum Empfänger der Schließeinrichtung gebracht werden muss und es bedarf keiner benutzergesteuerten Aktivierung des Schlüssels, beispielsweise durch einen Knopfdruck. Vielmehr reicht es aus, wenn der elektronische Schlüssel sich in Körpernähe des jeweiligen Benutzers befindet, beispielsweise in einer Hosentasche, Aktentasche oder dgl. Die zu übertragenden Daten können hierbei beispielsweise auf eine vom elektronischen Schlüssel generierte Trägerfrequenz aufmoduliert werden.

Die Bedienerfreundlichkeit der Zutrittskontrolle wird dadurch wesentlich erhöht und es wird überdies sichergestellt, dass eine Datenübertragung lediglich dann erfolgt, wenn die den Schlüssel tragende Person sich der Schließeinrichtung nähert oder diese berührt, sodass Manipulationsmöglichkeiten durch Dritte nahezu ausgeschlossen sind.

Unter elektronischen Schlüsseln werden nachfolgend unterschiedliche Ausbildungen von Identmedien verstanden, die einen elektronischen Code bzw. Identifikationsdaten gespeichert haben, z.B. in der Form von Karten, Schlüsselanhängern und Kombinationen aus mechanischen und elektronischen Schlüsseln.

Die kapazitive Datenübertragung kann auch für die Messdatenübertragung im Zuge der Messwertefassung von Nutzen sein. In der Messtechnik versteht man unter Datenerfassung die Aufnahme analoger Signale mittels geeigneter Hardware. Hierbei werden mit Hilfe eines Analog-Digital-Umsetzers digitale Messdaten erzeugt, die dann mittels einer geeigneten Lesevorrichtung sofort ausgelesen oder für ein späteres Auslesen in einem Speicher der Messdatenerfassungseinheit gespeichert werden. Neben der unidirektionalen Messdatenauslesung unterstützen manche Messdatenerfassungseinheiten auch die Möglichkeit einer bidirektionalen Datenübertragung, bei welcher zusätzlich Daten von einer Lese- und/oder Schreibeinheit in die Messdatenerfassungseinheit geschrieben werden, z.B. für Programmierungszwecke oder um komplexere Datenübertragungsprotokolle zu realisieren. Komplexere Datenübertragungsprotokolle können beispielsweise kryptographische Funktionen ermöglichen, insbesondere eine verschlüsselte Datenübertragung und/oder eine gegenseitige Authentifizierung.

Die vorliegende Erfindung bezieht sich insbesondere auf Messdatenerfassungseinheiten, die am Ort der Messdatenerfassung verbaut sind. Solche Messdatenerfassungseinheiten können sich an schwer zugänglichen Stellen befinden, sodass das händische Auslesen der Messdaten erschwert wird.

Ein Hauptproblem der kapazitiv gekoppelten Kommunikation besteht darin, dass die Übertragungsqualität zwischen der ersten Sende- und/oder Empfangseinrichtung und der zweiten Sende- und/oder Empfangseinrichtung mit steigendem räumlichen Abstand stark verschlechtert wird. Das bedeutet, dass sich das Signal-Rausch-Verhältnis (SNR) mit zunehmender Entfernung verringert. Um bei niedrigem SNR eine Datenkommunikation realisieren zu können, muss ein robustes Modulationsverfahren gewählt werden. In den derzeitigen kapazitiv gekoppelten Kommunikationssystemen, welche für den Einsatz von On-to-Off-Body Kommunikation z.B. in der Schließtechnik optimiert sind, werden daher sehr einfach aufgebaute Empfänger, Sender und Sende-Empfänger (Transceiver) eingesetzt, welche zum Beispiel über Amplitudenmodulation, nämlich On-Off-Keying (OOK), binäre Frequenzumtastung (2-FSK) oder binäre Phasenumtastung (BPSK) kommunizieren. Diese Modulationsarten sind sehr robust gegen Störungen und somit können hohe Reichweiten erzielt werden. Nachteilig bei diesen Modulationsverfahren ist aber die relativ lange Kommunikationszeit, weshalb die Transceiver lange in Betrieb sind und somit Strom verbrauchen. Dieser Stromverbrauch verringert die Laufzeit der Energiequelle. Die langen Kommunikationszeiten verursachen nicht nur Energieprobleme und somit Wartungskosten, sondern beeinträchtigen vor allem die Benutzerfreundlichkeit. Soll die kapazitiv gekoppelte Datenkommunikation in der Schließtechnik angewendet werden, so muss aus der Anwendersicht der gesamte Aufsperrvorgang in einer Zeitdauer von ca. 0,4 Sekunden abgeschlossen sein. Diese Zeit umfasst das Eindringen des Anwenders in den Empfangsbereich, die Datenkommunikation und den mechanischen Sperrvorgang. Wenn diese Zeitdauer überschritten wird, so ist das System aus Anwendersicht zu langsam und somit nicht alltagstauglich.

Dieses Problem wird dadurch noch weiter verstärkt, dass der Zeitbedarf für den Datenaustausch noch weiter erhöht wird, wenn man die Datenübertragung mit höherer Sicherheit ausstatten will. Eine Erhöhung der Sicherheit durch Verschlüsselungs- und/oder Authentifizierungsverfahren geht mit einer Vergrößerung der zu übertragenden Datenmenge einher.

Der Erfindung liegt daher die Aufgabe zugrunde, ein Verfahren und eine Vorrichtung der eingangs genannten Art dahingehend weiterzubilden, dass der Stromverbrauch für die Datenübertragung verringert und die Benutzerfreundlichkeit des Systems erhöht wird, wobei gleichzeitig eine zuverlässige Datenübertragung sichergestellt werden soll.

Zur Lösung dieser Aufgabe sieht die Erfindung bei einem Verfahren der eingangs genannten Art vor, dass die kapazitive Datenübermittlung die Übermittlung eines ersten und eines zweiten Teilstroms von Daten umfasst, wobei der erste Teilstrom der kapazitiv übermittelten Daten mittels eines ersten Modulationsverfahrens, insbesondere On-Off Keying (OOK), binäre Frequenzumtastung (2-FSK) oder binäre Phasenumtastung (BPSK), und der zweite Teilstrom der kapazitiv übermittelten Daten mittels eines vom ersten Modulationsverfahren verschiedenen, zweiten, vorzugsweise digitalen Modulationsverfahrens moduliert wird. Es werden somit zwei verschiedene Modulationsverfahren miteinander kombiniert, wobei die Vorteile beider Modulationsverfahren ausgenützt werden. Der Vorteil der hohen Reichweite und der Robustheit gegenüber Störungen des ersten Modulationsverfahrens, insbesondere On-Off Keying, binäre Frequenzumtastung (2-FSK) oder binäre Phasenumtastung (BPSK), wird mit dem Vorteil der hohen Übertragungsgeschwindigkeit des zweiten Modulationsverfahrens verbunden. Als zweites Modulationsverfahren wird hierbei bevorzugt Phasenumtastung (PSK), Amplitudenumtastung (ASK) oder Quadraturamplitudenmodulation (QAM), oder Frequenzumtastung (FSK), insbesondere 4-QAM, 16-QAM, differentielle Quadraturphasenumtastung (DQPSK), Quadraturphasenumtastung (QPSK), 8-Phasenumtastung (8-PSK) oder Minimum Shift Keying (MSK), gewählt. Die Verwendung des beschriebenen zweiten Modulationsverfahrens reduziert zwar die mögliche Reichweite der Datenkommunikation, verkürzt aber auf Grund der deutlich erhöhten Datenübertragungsrate die Kommunikationszeit. Dies macht sich vor allem bei hohen Datenaufkommen bemerkbar, wie es bei Zutrittssystemen mit hohen sicherheitstechnischen Anforderungen der Fall ist. Im Folgenden wird zum einfacheren Verständnis stellvertretend für das erste Modulationsverfahren lediglich auf On-Off Keying (OOK) Bezug genommen, obwohl die Ausführungen in gleicher Weise beispielsweise auch für binäre Frequenzumtastung (2-FSK) oder binäre Phasenumtastung (BPSK) gelten.

Wesentlich ist, dass das erste und das zweite Modulationsverfahren während eines einzigen Datenübertragungsvorganges bzw. im Falle der Anwendung in der Schließtechnik während eines Zutrittsvorganges verwendet werden, d.h. während der Datenübermittlung, die anlässlich der Annäherung und nachfolgenden Berührung der Köppelelektrode durch einen Anwender erfolgt.

Die Aufteilung der während dieses Übertragungsvorganges kapazitiv übertragenen Daten in einen ersten und einen zweiten Teildatenstrom kann auf verschiedene Art und Weise erfolgen. Gemäß einer ersten Variante ist bevorzugt vorgesehen, dass die erste Sende- und/oder Empfangseinrichtung während des Datenübertragungsvorganges an die zweite Sende- und/oder Empfangseinrichtung angenähert wird, wobei der erste Teildatenstrom während eines ersten Annäherungsweges und der zweite Teildatenstrom während eines zweiten, daran anschließenden Annäherungsweges übertragen wird. Das System arbeitet daher zunächst im On-Off Keying-Modus mit hoher Reichweite. Bei einer Annäherung der ersten Sende- und/oder Empfangseinrichtung an die zweite Sende- und/oder Empfangseinrichtung verbessert sich das Signal-Rausch-Verhältnis und das zweite Modulationsverfahren ist anwendbar. Somit schaltet das System von einer einfachen robusten Modulation (OOK) zu einer höheren Modulation mit höherem Datendurchsatz um. Dieses System lässt sich als Einträgersystem wie auch als Mehrträgersystem (z.B. mittels eines orthogonalen Frequenzmultiplexverfahrens - OFDM) realisieren.

Eine automatische Umschaltung vom ersten Modulationsverfahren in das zweite Modulationsverfahren gelingt bevorzugt dadurch, dass eine für die Qualität der Datenübertragung charakteristische Kenngröße, wie z.B. die Amplitude, des kapazitiv übermittelten Signals gemessen wird und die Umschaltung vom ersten auf das zweite Modulationsverfahren in Abhängigkeit von der Kenngröße erfolgt. Besonders bevorzugt erfolgt das Umschalten vom ersten auf das zweite Modulationsverfahren bei Erreichen eines Grenzwertes der Kenngröße.

Alternativ kann die Verteilung der Daten auf den ersten und den zweiten Teildatenstrom so erfolgen, dass der erste Teildatenstrom auf ein erstes Trägersignal und der zweite Teildatenstrom auf ein zweites Trägersignal aufmoduliert werden. Die Daten werden somit parallel auf zwei unterschiedliche Trägersignale aufmoduliert, wobei die Trägersignale bevorzugt voneinander verschiedene Frequenzen aufweisen. Insbesondere werden der erste Teildatenstrom und der zweite Teildatenstrom mittels eines Frequenzmultiplexverfahrens, insbesondere eines orthogonalen Frequenzmultiplexverfahrens übertragen. Die im Zuge eines Zutrittsvorganges zu übertragenden Daten werden somit doppelt übertragen, einmal mit dem ersten Modulationsverfahren auf das erste Trägersignal aufmoduliert und das zweite Mal mit dem zweiten Modulationsverfahren auf das zweite Trägersignal aufmoduliert. Die Übertragung der beiden Datenströme erfolgt dabei bevorzugt parallel, d.h. gleichzeitig, wobei im Empfänger beide Datenströme wieder demoduliert werden und auf Datenpaketebene die Datenpakete desjenigen Datenstroms für die Weiterverarbeitung in der zweiten Sende- und/oder Empfangseinrichtung ausgewählt werden, die jeweils eine höhere Qualität der Daten gewährleisten. Die Beurteilung der Qualität der Daten erfolgt dabei bevorzugt anhand von fehlererkennenden Codes, wie z.B. mittels Cyclic Redundancy Check (CRC).

Um die Sicherheit sowie die Qualität der Datenübertragung des zuvor beschriebenen Systems noch weiter zu erhöhen, wird bevorzugt so vorgegangen, dass die Trägerfrequenzen in einer zuvor festgelegten Reihenfolge gewechselt werden. Alternativ können die Trägerfrequenzen während der Datenkommunikation dynamisch (deterministisch oder zufällig) festgelegt und gewechselt werden. Damit kann die Sicherheit der Datenkommunikation weiter erhöht werden.

Wie bereits erwähnt kann die Erfindung besonders vorteilhaft in der Schließtechnik verwendet werden. Die erste Sende- und/oder Empfangseinrichtung ist dabei als elektronischer Schlüssel und die zweite Sende- und/oder Empfangseinrichtung als Zutrittskontrollvorrichtung ausgebildet, wobei die Datenübermittlung die Übermittlung von Identifikationsdaten vom elektronischen Schlüssel an die Zutrittskontrollvorrichtung umfasst, wobei die Identifikationsdaten in der Zutrittskontrollvorrichtung zur Feststellung der Zutrittsberechtigung ausgewertet werden und in Abhängigkeit von der festgestellten Zutrittsberechtigung der Zutritt freigegeben oder verwehrt wird.

Andererseits kann die Erfindung auch im Rahmen eines Messdatenerfassungs- und Übertragungssystems zum Einsatz gelangen. Die erste Sende- und/oder Empfangseinrichtung umfasst dabei eine Messdatenerfassungseinheit mit einem mindestens eine Koppelelektrode aufweisenden Datenübertragungsmodul und die zweite Sende- und/oder Empfangseinrichtung ist als Lese- und/oder Schreibeinheit ausgebildet.

Zur Lösung der der Erfindung zugrunde liegenden Aufgabe sieht die Erfindung gemäß einem zweiten Aspekt bei einer Vorrichtung der eingangs genannten Art vor, dass das kapazitive Datenübertragungsmodul wenigstens einen die Modulations- und/oder Demodulationsschaltung aufweisenden Mikrochip umfasst, der zum Modulieren bzw. Demodulieren von Daten mittels eines ersten digitalen Modulationsverfahrens, insbesondere On-Off Keying (OOK), binäre Frequenzumtastung (2-FSK) oder binäre Phasenumtastung (BPSK), und mittels eines vom ersten Modulationsverfahren verschiedenen, zweiten digitalen Modulationsverfahrens ausgebildet ist.

Bevorzugt ist das zweite Modulationsverfahren als Phasenumtastung (PSK), Amplitudenumtastung (ASK) oder Quadraturamplitudenmodulation (QAM), oder Frequenzumtastung (FSK), insbesondere 4-QAM, 16-QAM, differentielle Quadraturphasenumtastung (DQPSK), Quadraturphasenumtastung (QPSK), 8-Phasenumtastung (8-PSK) und/oder Minimum Shift Keying (MSK), ausgebildet.

Nachteilig bei der kapazitiven Datenübertragung mittels der zuvor beschriebenen Modulationsverfahren ist, dass keine standardisierten Bauteile (z.B. für den Einsatz in Zutrittskontrollvorrichtungen) zur Verfügung stehen, mit denen die kapazitive Datenübertragung in einfacher und kostengünstiger Weise realisiert werden kann. Dies ist insbesondere damit zu erklären, dass die Nutzung von kapazitiven Datenübertragungssystemen z.B. bei schließtechnischen Einrichtungen bisher nur in sehr begrenztem Ausmaß kommerziell verfügbar gemacht wurde, sodass sich die Entwicklung von Großserienmodellen von Datenübertragungsmodulen bisher nicht gelohnt hat.

Es wurde jedoch überraschend gefunden, dass Mikrochips Verwendung finden können, die üblicherweise in völlig anderen technischen Bereichen verwendet werden. So sieht eine bevorzugte Weiterbildung der erfindungsgemäßen Vorrichtung vor, dass der Mikrochip ein für die Datenübertragung über eine Trägerfrequenzanlage für Stromnetze (powerline communication) ausgebildeter Datenübertragungs-Mikrochip ist. Alternativ kann vorgesehen sein, dass der Mikrochip ein für die Radaranwendungen ausgebildeter Modulations-Mikrochip ist. Dadurch wurde eine Möglichkeit gefunden, mit der die kapazitive Datenübertragung in einfacher und kostengünstiger Weise baulich realisiert werden kann, wobei dadurch kleinbauende bzw. miniaturisierte Datenübertragungsmodule zur Verfügung gestellt werden können.

PLC-Transceiver (Power Line Communication) bieten beispielsweise die Möglichkeit über OFDM (orthogonales Frequenzmultiplexverfahren) mittels verschiedener Modulationsverfahren, wie z.B. differentielle BPSK (binäre Phasenumtastung), QPSK (Quadraturphasenumtastung), 8-PSK (8-Phasenumtastung), zu kommunizieren. Diese Transceiver bieten weiters den Vorteil, dass bereits Fehler-Detektionsverfahren und eine AES (Advanced Encryption Standard) Verschlüsselung implementiert sind. Beispielsweise seien die folgenden Mikrochips für die PLC-Kommunikation genannt, die für die Verwendung im Rahmen der vorliegenden Erfindung geeignet sind: ST7590 von ST Microelectronics, SM2400 von Semitech oder ATPL220A von ATMEL.

Der Mikrochip AD8333 von Analog Devices sei als Beispiel für einen Demodulator genannt, der vor allem für Radaranwendungen und adaptive Antennen eingesetzt wird.

Weitere Beispiele für Modulatoren und Demodulatoren sind: LTC5598 von Linear Technology, LTC5584 von Linear Technology, LT5517 von Linear Technology, UPC27766GR von NEC, CMX973 von CML Microcircuits.

Der Nachteil einiger der vorgenannten Transceiver liegt in der niedrigen Empfangssensitivität und im hohen Rauschpegel verglichen zu Transceivern, die in der kapazitiv gekoppelten Kommunikation bereits im Einsatz sind. Dies dürfte auch der Grund dafür sein, dass diese Transceiver bislang nicht in der kapazitiv gekoppelten Kommunikation eingesetzt wurden. Um diese Transceiver trotzdem einsetzen zu können, ist es vorteilhaft, wenn das empfangene Signal über einen geeigneten Verstärker geführt wird. Eine bevorzugte Weiterbildung der erfindungsgemäßen Vorrichtung sieht daher vor, dass der Mikrochip unter Zwischenschaltung eines rauscharmen Verstärkers an die wenigstens eine Koppelelektrode angeschlossen ist.

Bei der kapazitiven Datenübertragung kann die Übertragung der Daten sowohl berührungslos als auch kontaktbehaftet erfolgen. Bei schließtechnischen Anwendungen ist es besonders vorteilhaft, wenn der Benutzer ein Identmedium bei sich trägt, das wenigstens eine kapazitive Koppelfläche aufweist, über welche die vom Identmedium generierten Signale auf die Körperoberfläche des Benutzers eingekoppelt werden. Zum Öffnen eines Schlosses einer Tür reicht es aus, wenn der Benutzer mit einem Körperteil, wie z.B. der Hand eine Koppelelektrode des Schlosses berührt oder sich an diese annähert, wodurch die vom Identmedium generierten Signale in die Zutrittskontrollvorrichtung des Schlosses eingekoppelt und dort ausgewertet werden. Im Datenübertragungsmodul des Senders werden die zu übertragenden Signale auf einen Träger aufmoduliert und im Datenübertragungsmodul des Empfängers werden die Signale wieder demoduliert. Der beschriebene Vorgang kann in äquivalenter Weise für die Datenübertragung vom Schloss an das Identmedium vorgesehen sein. Eine Koppelelektrode des Schlosses ist hierbei bevorzugt in eine Handhabe, z.B. einen Türknauf oder einen Drücker, der Schließvorrichtung integriert.

Obwohl die vorliegende Erfindung nicht auf bestimmte Typen von schließtechnischen Vorrichtungen beschränkt ist, werden die Vorteile der Erfindung besonders deutlich bei einer bevorzugten Ausbildung, bei der die schließtechnische Komponente eine Schließeinrichtung ist, die eine Auswerteschaltung aufweist, der die vom Datenübertragungsmodul empfangenen Identifikationsdaten zugeführt sind, um die Zutrittsberechtigung auf Grund der empfangenen Identifikationsdaten festzustellen, wobei die Auswerteschaltung mit einem Sperrglied zum wahlweisen Freigeben oder Sperren des Zutritts zusammenwirkt. Als Schließeinrichtung ist zum Beispiel ein elektrisch betätigbares oder freigebbares Türschloss oder dgl. zu verstehen. In diesem Zusammenhang ist es besonders vorteilhaft, wenn die schließtechnische Komponente oder die weitere schließtechnische Komponente ein elektronisches Medium oder Gerät mit einem Speicher für Identifikations- oder Zutrittsrechtsdaten, insbesondere ein elektronisches Schlüsselmedium ist.

Wie bereits erwähnt kann die Erfindung auch für die Übertragung von Messdaten angewendet werden. Die erste Sende- und/oder Empfangseinrichtung umfasst in diesem Fall eine Messdatenerfassungseinheit mit einem Datenübertragungsmodul zum Übertragen von Messdaten an die als Lese- und/oder Schreibeinheit ausgebildete zweite Sende- und/oder Empfangseinrichtung, wobei das Datenübertragungsmodul als wenigstens eine Koppelelektrode aufweisendes kapazitives Datenübertragungsmodul ausgebildet ist.

Für die Realisierung der kapazitiven Datenübertragung weist das Datenübertragungsmodul der Messdatenerfassungseinheit und der Lese- und/oder Schreibeinheit jeweils mindestens eine Koppelelektrode mit einer zugehörigen Koppelkapazität für eine kapazitive Signalaus- bzw. -einkopplung auf. Beispielsweise ist die Koppelelektrode als eine leitende Fläche, insbesondere eine Kupferfläche oder metallische Fläche ausgebildet. Eine derartige Ausbildung der Datenübertragungsmodule ermöglicht eine Datenübertragung ohne eine galvanische Verbindung. Beide Komponenten, d.h. die Messdatenerfassungseinheit und die Lese- und/oder Schreibeinheit, sind bevorzugt jeweils geerdet. Über die Erdkapazitäten der Messdatenerfassungseinheit und der Lese- und/oder Schreibeinheit kann der Wechselstromkreis geschlossen werden. Alternativ oder zusätzlich kann der Stromkreis durch eine direkte kapazitive oder galvanische Kopplung zwischen den Masse-Elektroden geschlossen werden.

Die kapazitive Datenübertragung funktioniert hierbei bevorzugt so, dass das Datenübertragungsmodul der Messdatenerfassungseinheit Mittel zur Erzeugung eines kapazitiven Nahfelds aufweist, über welches die Messdaten ausgesendet werden, sodass sich bei Berührung der Messdatenerfassungseinheit oder bei Annäherung an die Messdatenerfassungseinheit durch die Lese- und/oder Schreibeinheit ein Wechselstromkreis schließt und ein elektrischer Fluss entsteht, der von dem Datenübertragungsmodul der Lese- und/oder Schreibeinheit erfasst werden kann.

Die für die kapazitive Datenübertragung jeweils verwendete Koppelelektrode des Datenübertragungsmoduls kann an einer Außenfläche eines Gehäuses der Messdatenerfassungseinheit bzw. der Lese- und/oder Schreibeinheit angeordnet sein. Bevorzugt ist die Koppelelektrode als leitende Beschichtung ausgebildet.

Die Messdatenerfassungseinheit weist einen Sensor auf, mit der die zu messende, vorzugsweise analoge Größe erfasst wird. Der Sensor kann hierbei beispielsweise zur Erfassung einer Durchflussgeschwindigkeit, Wärmemenge, Temperatur, Lösungskonzentration (z.B. Zuckergehalt, Alkoholgehalt, Säuregehalt) oder eines Drucks ausgebildet sein. Bevorzugt kommt eine Messdatenerfassungseinheit zum Einsatz, die Befestigungsmittel zum Befestigen der Messdatenerfassungseinheit an einem elektrisch leitenden Leitungsrohr umfasst. Dies ermöglicht es, den Sensor so anzuordnen, dass dieser in das Rohrinnere hineinragt oder mit dem Rohrinneren in Verbindung steht, wobei der Sensor z.B. vom zu messenden Medium umströmt wird. Die zu messenden Medien können fest (z.B. Kies), staubförmig (z.B. Mehl mit Luft), flüssig und/oder gasförmig sein.

Die Befestigung der Messdatenerfassungseinheit an einem Leitungsrohr ermöglicht eine einfache Ausgestaltung der kapazitiven Kopplung, bei der das Datenübertragungsmodul wenigstens eine weitere Koppelelektrode aufweist, die im am Leitungsrohr befestigten Zustand der Messdatenerfassungseinheit mit dem Leitungsrohr elektrisch verbunden ist. Die Datenübertragung kann hierbei unter Mitverwendung des elektrisch leitenden Leitungsrohres erfolgen. Eine besonders gute Kopplung ergibt sich hierbei, wenn, wie dies einer bevorzugten Weiterbildung entspricht, die Messdatenerfassungseinheit und die Lese- und/oder Schreibeinheit in Abstand voneinander an einem Leitungsrohr oder an zwei verschiedenen, elektrisch oder mittels kapazitiver Kopplung miteinander verbundenen Leitungsrohren befestigt sind.

Die Möglichkeit der Mitverwendung des elektrisch leitenden Leitungsrohres, auf dem die Messdatenerfassungseinheit angeordnet ist, im Rahmen der kapazitiven Kopplung ergibt eine Reihe von vorteilhaften Ausführungsformen. Gemäß einer ersten Ausführungsform ist vorgesehen, dass die Messdatenerfassungseinheit an einem Leitungsrohr befestigt ist, wobei eine erste Koppelelektrode der Messdatenerfassungseinheit am Gehäuse angeordnet und eine zweite Koppelelektrode elektrisch mit dem Leitungsrohr verbunden ist, und dass die Lese- und/oder Schreibeinheit eine dritte und eine vierte Koppelelektrode aufweist, wobei zur Datenübertragung eine kapazitive Koppelstrecke zwischen der ersten und der dritten Koppelelektrode und eine elektrische Verbindung oder eine kapazitive Koppelstrecke zwischen der vierten Koppelelektrode und dem Leitungsrohr vorgesehen sind.

Gemäß einer zweiten Ausführungsform ist vorgesehen, dass die Messdatenerfassungseinheit an einem Leitungsrohr befestigt ist, wobei eine erste Koppelelektrode der Messdatenerfassungseinheit am Gehäuse angeordnet und eine zweite Koppelelektrode elektrisch mit dem Leitungsrohr verbunden ist, und dass die Lese- und/oder Schreibeinheit an dem Leitungsrohr befestigt ist, wobei eine dritte Koppelelektrode der Lese- und/oder Schreibeinheit am Gehäuse angeordnet und eine vierte Koppelelektrode elektrisch mit dem Leitungsrohr verbunden ist, wobei zur Datenübertragung eine kapazitive Koppelstrecke zwischen der ersten und der dritten Koppelelektrode und eine über das Leitungsrohr führende elektrische Verbindung zwischen der zweiten und der vierten Koppelelektrode vorgesehen sind.

Bei einem Rohr aus nichtleitendem Material kann die für die kapazitive Kopplung erforderliche Leitfähigkeit durch eine in dem Rohr befindliche, ausreichend elektrisch leitende Flüssigkeit ermöglicht werden.

Gemäß einer dritten Ausführungsform ist vorgesehen, dass die Messdatenerfassungseinheit an einem ersten Leitungsrohr befestigt ist, wobei eine erste Koppelelektrode der Messdatenerfassungseinheit am Gehäuse angeordnet und eine zweite Koppelelektrode elektrisch mit dem ersten Leitungsrohr verbunden ist, und dass die Lese- und/oder Schreibeinheit an einem zweiten Leitungsrohr befestigt ist, wobei eine dritte Koppelelektrode der Lese- und/oder Schreibeinheit am Gehäuse angeordnet und eine vierte Koppelelektrode elektrisch mit dem zweiten Leitungsrohr verbunden ist, wobei zur Datenübertragung eine kapazitive Koppelstrecke zwischen der ersten und der dritten Koppelelektrode und eine kapazitive Koppelstrecke zwischen dem ersten und dem zweiten Leitungsrohr vorgesehen sind.

Gemäß einer vierten Ausführungsform ist vorgesehen, dass die Messdatenerfassungseinheit an einem vorzugsweise nicht leitenden Leitungsrohr befestigt ist, wobei eine erste Koppelelektrode und eine zweite Koppelelektrode der Messdatenerfassungseinheit am Gehäuse angeordnet sind, und dass die Lese- und/oder Schreibeinheit an ihrem Gehäuse eine dritte und eine vierte Koppelelektrode aufweist, wobei die Koppelelektroden so angeordnet sind, dass die erste und die dritte Koppelelektrode und die zweite und die vierte Koppelelektrode in einer Lese- bzw. Schreibposition der Lese- und/oder Schreibeinheit jeweils gegenüberliegend angeordnet sind, wobei zur Datenübertragung eine kapazitive Koppelstrecke zwischen der ersten und der dritten Koppelelektrode und eine kapazitive Koppelstrecke zwischen der zweiten und der vierten Koppelelektrode vorgesehen sind.

Allgemein ist zu erwähnen, dass die Messdatenerfassungseinheit eine optische Anzeige aufweisen kann, auf der z.B. Messdaten oder Statusinformationen angezeigt werden können. Die Lese- und/oder Schreibeinheit kann lanzenförmig ausgebildet sein, damit der Benutzer leichter an die Messdatenerfassungseinheit herankommen kann. Die Lanzenspitze ist dabei vorteilhafterweise mit einer Koppelelektrode ausgestattet.

Um eine sichere Datenübertragung zu ermöglichen (z.B. Handshake oder Verschlüsselung), ist bevorzugt vorgesehen, dass sowohl die Messdatenerfassungseinheit als auch die Lese- und/oder Schreibeinheit Daten senden und empfangen können, sodass eine bidirektionale Datenübertragung stattfindet.

Die Lese- und/oder Schreibeinheit oder die Messdatenerfassungseinheit kann in einer weiteren bevorzugten Ausführung mit einem Energiewandler ausgestattet sein, welcher in der Lage ist, verschiedene Energieformen in elektrische Energie umzuwandeln, die für die Energieversorgung der Messdatenerfassungseinheit bzw. der Lese- und/oder Schreibeinheit herangezogen werden kann. Insbesondere können mechanische Vibrationen, Temperaturunterschiede, Umgebungslicht etc. in elektrische Energie umgewandelt werden.

Die Lese- und/oder Schreibeinheit kann eine Schnittstelle zur Datenweitergabe aufweisen. Diese Schnittstelle kann z.B. als LAN-, WLan oder 6LoWPAN Schnittstelle oder als Schnittstelle für ein Mess-, Installations-, und Gebäudebussystem ausgebildet sein. Die Messdaten können in einer weiteren bevorzugten Ausführung in elektronischen Datenverarbeitungssystemen gespeichert und z.B. über einen eingeschränkten Zugriff vom Internet aus abgefragt werden.

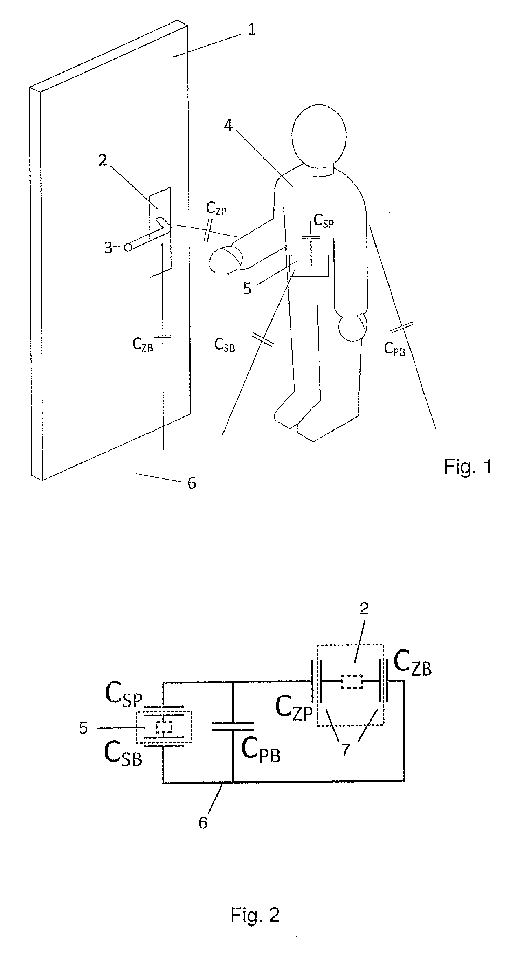

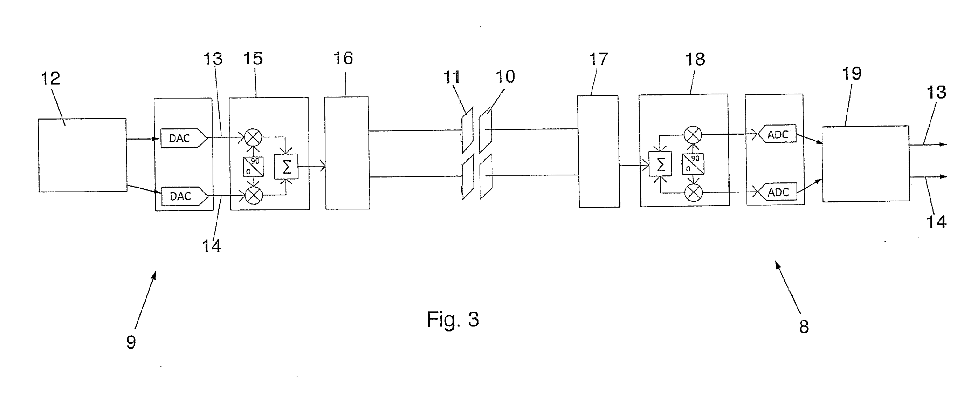

Die Erfindung wird nachfolgend anhand eines in der Zeichnung dargestellten Ausführungsbeispiels näher erläutert. In dieser zeigen Fig. 1 eine schematische Darstellung der Funktionsweise einer mit kapazitiver Kopplung arbeitenden Zutrittskontrollvorrichtung, Fig. 2 ein vereinfachtes Ersatzschaltbild der Ausbildung gemäß Fig. 1 und Fig. 3 ein Blockschaltbild eines Datenübertragungssystems.

In Fig. 1 ist schematisch eine Tür mit einer zum Türdrücker greifenden Person sowie die einzelnen Koppelkapazitäten dargestellt. Die Tür ist mit 1 bezeichnet und weist eine Zutrittskontrollvorrichtung 2 mit einem als Drücker ausgebildeten Betätigungsglied 3 auf. Die Person 4 trägt einen elektronischen Schlüssel 5, welcher beispielsweise in einer Hosentasche eingesteckt sein kann. Der elektronische Schlüssel 5 erzeugt hierbei ein im Wesentlichen elektrisches Feld mit einer Trägerfrequenz, auf welches Identifikationsdaten aufmoduliert werden. Das elektrische Signal wird über die Körperoberfläche der Person 4 und in der Folge an einen Empfänger der Zutrittskontrollvorrichtung 2 weitergeleitet. Dabei weist der elektronische Schlüssel 5 eine Kapazität CSB gegen den Boden 6 auf. Am Übergang zwischen dem elektronischen Schlüssel 5 und der Person 4 ist eine Koppelkapazität CSP zu beobachten. Weiters tritt eine Verlustkapazität CPB zwischen der Person 4 und dem Boden 6 auf. Schließlich weist die Zutrittskontrollvorrichtung 2 eine Zylinderkapazität CZB gegen den Boden auf.

Das entsprechende vereinfachte Ersatzschaltbild ist in Fig.2 dargestellt, wobei wiederum die beschriebenen Kapazitäten angeführt sind. Dabei bildet CPB alle parasitären Kapazitäten ab, welche nichts zur Koppelung zwischen Empfänger und Sender beitragen. CSB bildet die Kapazitäten nach, welche als Summe für die kapazitive Koppelung der Sendeelektrode gegen den Boden zur Verfügung steht. CSP bildet die Kapazitäten nach, welche als Summe für die kapazitive Koppelung der Person 4 zur zweiten Elektrode zur Verfügung steht. CZB bildet die Kapazitäten nach, welche als Summe für die kapazitive Koppelung von der Zutrittskontrollvorrichtung bzw. deren Schließzylinder zum Boden zur Verfügung steht. Dabei ist in Fig.2 die Zutrittskontrollvorrichtung wiederum mit 2 bezeichnet und weist einen Empfangskondensator 7 auf.

Fig. 3 zeigt ein vereinfachtes Schaltbild eines Datenübertragungsmoduls 9 des elektronischen Schlüssels 5 samt Koppelelektrode 11 und eines Datenübertragungsmoduls 8 der Zutrittskontrollvorrichtung 2 samt Koppelelektrode 10 des Empfangskondensators 7. Anhand dieses Ausführungsbeispiels wird das zweite Modulationsverfahren, nämlich eine Quadraturmodulation, erläutert. Wie ersichtlich, wird senderseitig ein digitaler Signalprozessor bzw. ein Mikrocontroller 12 eingesetzt, der die Modulation der Nutzdaten übernimmt. Diese digitalen Werte werden mit Hilfe eines Digital-Analog-Wandlers (DAC) in ein analoges Signal umgewandelt und gefiltert und als Basisbandsignale 13,14 an den Quadraturmodulator 15 weitergegeben. Dieser Modulator 15 moduliert das Datensignal auf ein Trägersignal und steuert die Koppelelektroden 11 an. Zwischen den Koppelelektroden 11 und dem Modulator 15 liegen noch ein Ausgangsverstärker und ein Filter (zusammen 16). Empfängerseitig wird zunächst das an den Koppelelektroden 10 anliegende Signal gefiltert und mittels eines rauscharmen Verstärkers 17 verstärkt und mittels des Quadraturdemodulators 18 auf das Basisband heruntergemischt. Die Basisbandsignale werden über einen Analog-To-Digital-Converter (ADC) auf ein digitales Signal umgewandelt und stehen dem digitalen Signalprozessor bzw. Mikrocontroller 19 zur Demodulation zur Verfügung.

## Patentansprüche

1. Verfahren zur Übermittlung von Daten zwischen einer ersten Sende- und/oder Empfangseinrichtung und einer zweiten Sende- und/oder Empfangseinrichtung, wobei die Datenübermittlung zumindest teilweise über eine kapazitive Kopplung zwischen der ersten und der zweiten Sende- und/oder Empfangseinrichtung erfolgt und die zu übermittelnden Daten auf wenigstens ein Trägersignal aufmoduliert werden, **dadurch gekennzeichnet, dass** die kapazitive Datenübermittlung die Übermittlung eines ersten und eines zweiten Teilstroms von Daten umfasst, wobei der erste Teilstrom der kapazitiv übermittelten Daten mittels eines ersten Modulationsverfahrens, insbesondere On-Off Keying (OOK), binäre Frequenzumtastung (2-FSK) oder binäre Phasenumtastung (BPSK), und der zweite Teilstrom der kapazitiv übermittelten Daten mittels eines von ersten Modulationsverfahren verschiedenen, zweiten, vorzugsweise digitalen Modulationsverfahrens moduliert wird.

2. Verfahren nach Anspruch 1, **dadurch gekennzeichnet, dass** als zweites Modulationsverfahren Phasenumtastung (PSK), Amplitudenumtastung (ASK) oder Quadraturamplitudenmodulation (QAM), oder Frequenzumtastung (FSK), insbesondere 4-QAM, 16-QAM, differentielle Quadraturphasenumtastung (DQPSK), Quadraturphasenumtastung (QPSK), 8-Phasenumtastung (8-PSK) Gauß'sche Frequenzumtastung (GFSK), Discrete Multitone Transmission (DMT), Trellis-Code-Modulation (TCM), VSB-Modulation (Vestigial Sideband Modulation), ein orthogonales Frequenzmultiplexverfahren (OFDM) oder Minimum Shift Keying (MSK), gewählt wird.

3. Verfahren nach Anspruch 1 oder 2, **dadurch gekennzeichnet, dass** die erste Sende- und/oder Empfangseinrichtung während des Datenübertragungsvorganges an die zweite Sende- und/oder Empfangseinrichtung angenähert wird, wobei der erste Teildatenstrom während eines ersten Annäherungsweges und der zweite Teildatenstrom während eines zweiten, daran anschließenden Annäherungsweges übertragen wird.

4. Verfahren nach Anspruch 1, 2 oder 3, **dadurch gekennzeichnet, dass** eine für die Qualität der Datenübertragung charakteristische Kenngröße, wie z.B. die Amplitude, des kapazitiv übermittelten Signals gemessen wird und die Umschaltung vom ersten auf das zweite Modulationsverfahren in Abhängigkeit von der Kenngröße erfolgt.

5. Verfahren nach Anspruch 4, **dadurch gekennzeichnet, dass** das Umschalten vom ersten auf das zweite Modulationsverfahren bei Erreichen eines Grenzwertes der Kenngröße erfolgt.

6. Verfahren nach Anspruch 1 oder 2, **dadurch gekennzeichnet, dass** der erste Teildatenstrom auf ein erstes Trägersignal und der zweite Teildatenstrom auf ein zweites Trägersignal aufmoduliert werden.

7. Verfahren nach Anspruch 6, **dadurch gekennzeichnet, dass** der erste Teildatenstrom und der zweite Teildatenstrom mittels eines Frequenzmultiplexverfahrens, insbesondere eines orthogonalen Frequenzmultiplexverfahrens übertragen werden.

8. Verfahren nach einem der Ansprüche 1 bis 7 zur Zutrittskontrolle insbesondere in Gebäuden, **dadurch gekennzeichnet, dass** die erste Sende- und/oder Empfangseinrichtung als elektronischer Schlüssel und die zweite Sende- und/oder Empfangseinrichtung als Zutrittskontrollvorrichtung ausgebildet sind, wobei die Datenübermittlung die Übermittlung von Identifikationsdaten vom elektronischen Schlüssel an die Zutrittskontrollvorrichtung umfasst, wobei die Identifikationsdaten in der Zutrittskontrollvorrichtung zur Feststellung der Zutrittsberechtigung ausgewertet werden und in Abhängigkeit von der festgestellten Zutrittsberechtigung der Zutritt freigegeben oder verwehrt wird.

9. Verfahren nach einem der Ansprüche 1 bis 7 zur Übertragung von Messdaten, **dadurch gekennzeichnet, dass** die erste Sende- und/oder Empfangseinrichtung eine Messdatenerfassungseinheit mit einem mindestens eine Koppelelektrode aufweisenden Datenübertragungsmodul umfasst und die zweite Sende- und/oder Empfangseinrichtung als Lese- und/oder Schreibeinheit ausgebildet ist.

10. Datenübertragungsvorrichtung umfassend wenigstens eine erste Sende- und/oder Empfangseinrichtung, um eine Datenübermittlung zwischen der Sende- und/oder Empfangseinrichtung und einer zweiten Sende- und/oder Empfangseinrichtung zu ermöglichen, wobei die erste Sende-und/oder Empfangseinrichtung ein wenigstens eine Koppelelektrode aufweisendes kapazitives Datenübertragungsmodul aufweist, sodass die Datenübermittlung über eine kapazitive Kopplung zwischen der ersten Sende-und/oder Empfangseinrichtung und der zweiten Sende-und/oder Empfangseinrichtung erfolgen kann, wobei das Datenübertragungsmodul wenigstens eine Modulations- und/oder Demodulationsschaltung zum Aufmodulieren von Daten auf ein Trägersignal bzw. zum Demodulieren von Daten aus einem Signal aufweist, **dadurch gekennzeichnet, dass** das kapazitive Datenübertragungsmodul wenigstens einen die Modulations- und/oder Demodulationsschaltung aufweisenden Mikrochip umfasst, der zum Modulieren bzw. Demodulieren von Daten mittels eines ersten digitalen Modulationsverfahrens, insbesondere On-Off Keying (OOK), binäre Frequenzumtastung (2-FSK) oder binäre Phasenumtastung (BPSK), und mittels eines vom ersten Modulationsverfahren verschiedenen, zweiten, bevorzugt digitalen Modulationsverfahrens ausgebildet ist.

11. Datenübertragungsvorrichtung nach Anspruch 10, **dadurch gekennzeichnet, dass** das zweite Modulationsverfahren Phasenumtastung (PSK), Amplitudenumtastung (ASK) oder Quadraturamplitudenmodulation (QAM), oder Frequenzumtastung (FSK), insbesondere 4-QAM, 16-QAM, differentielle Quadraturphasenumtastung (DQPSK), Quadraturphasenumtastung (QPSK), 8-Phasenumtastung (8-PSK), Gauß'sche Frequenzumtastung (GFSK), Discrete Multitone Transmission (DMT), Trellis-Code-Modulation (TCM), VSB-Modulation (Vestigial Sideband Modulation), ein orthogonales Frequenzmultiplexverfahren (OFDM) oder Minimum Shift Keying (MSK), ist.

12. Datenübertragungsvorrichtung nach Anspruch 10 oder 11, **dadurch gekennzeichnet, dass** der Mikrochip ein für die Datenübertragung über eine Trägerfrequenzanlage für Stromnetze (powerline communication) ausgebildeter Datenübertragungs-Mikrochip ist.

13. Datenübertragungsvorrichtung nach Anspruch 10 oder 11, **dadurch gekennzeichnet, dass** der Mikrochip ein für Radaranwendungen oder adaptive Antennen ausgebildeter Datenübertragungs-Mikrochip ist.

14. Datenübertragungsvorrichtung nach einem der Ansprüche 10 bis 13, **dadurch gekennzeichnet, dass** der Mikrochip unter Zwischenschaltung eines rauscharmen Verstärkers an die wenigstens eine Koppelelektrode angeschlossen ist.

15. Datenübertragungsvorrichtung nach einem der Ansprüche 10 bis 14, die als Zutrittskontrollvorrichtung ausgebildet ist, wobei die erste Sende- und/oder Empfangseinrichtung als schließtechnische Komponente und die zweite Sende- und/oder Empfangseinrichtung als weitere schließtechnische Komponente ausgebildet ist.

16. Datenübertragungsvorrichtung nach Anspruch 15, **dadurch gekennzeichnet, dass** die schließtechnische Komponente eine Schließeinrichtung ist, die eine Auswerteschaltung aufweist, der die vom Datenübertragungsmodul empfangenen Identifikationsdaten zugeführt sind, um die Zutrittsberechtigung auf Grund der empfangenen Identifikationsdaten festzustellen, wobei die Auswerteschaltung mit einem verlagerbaren Glied zum wahlweisen Freigeben oder Sperren des Zutritts zusammenwirkt.

17. Datenübertragungsvorrichtung nach Anspruch 15 oder 16, **dadurch gekennzeichnet, dass** die schließtechnische Komponente oder die weitere schließtechnische Komponente ein elektronisches Medium oder Gerät mit einem Speicher für Identifikations- oder Zutrittsrechtsdaten ist.

18. Datenübertragungsvorrichtung nach einem der Ansprüche 10 bis 14, **dadurch gekennzeichnet, dass** die erste Sende- und/oder Empfangseinrichtung eine Messdatenerfassungseinheit mit einem Datenübertragungsmodul zum Übertragen von Messdaten an die als Lese- und/oder Schreibeinheit ausgebildete zweite Sende- und/oder Empfangseinrichtung umfasst, wobei das Datenübertragungsmodul als wenigstens eine Koppelelektrode aufweisendes kapazitives Datenübertragungsmodul ausgebildet ist.
